(19) Europäisches Patentamt / European Patent Office / Office européen des brevets

(11) **EP 2 115 048 B1**

(12) **EUROPEAN PATENT SPECIFICATION**

(45) Date of publication and mention
of the grant of the patent:
**24.12.2014 Bulletin 2014/52**

(21) Application number: **08728626.6**

(22) Date of filing: **31.01.2008**

(51) Int Cl.:
*C08J 5/18* (2006.01)          *C08J 3/20* (2006.01)
*C08L 33/06* (2006.01)

(86) International application number:
**PCT/US2008/052550**

(87) International publication number:
**WO 2008/109208 (12.09.2008 Gazette 2008/37)**

(54) **(METH)ACRYLIC PIGMENTED FILM, MARKING FILM, RECEPTOR SHEET AND METHOD FOR PREPARING THE SAME**

PIGMENTIERTER (METH)ACRYL-FILM, MARKIERUNGSFILM, REZEPTORFOLIE DAFÜR UND VERFAHREN ZU IHRER HERSTELLUNG

FILM PIGMENTÉ (MÉTH)ACRYLIQUE, FILM DE MARQUAGE, FEUILLE RÉCEPTRICE, ET LEURS PROCÉDÉS DE PRÉPARATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.03.2007 JP 2007052264**

(43) Date of publication of application:
**11.11.2009 Bulletin 2009/46**

(73) Proprietor: **3M Innovative Properties Company**
**Saint Paul, MN 55133-3427 (US)**

(72) Inventors:
• **ABE, Hidetoshi**
  **Tokyo 1588583 (JP)**
• **FURUSAWA, Masaaki**
  **Tokyo 1588583 (JP)**
• **TAKAMATSU, Yorinobu**
  **Tokyo 1588583 (JP)**

(74) Representative: **Vossius & Partner**
**Siebertstrasse 4**
**81675 München (DE)**

(56) References cited:
**JP-A- 08 253 540          KR-A- 20060 072 140**
**US-A- 4 045 517          US-A- 4 339 365**
**US-A1- 2004 202 879          US-A1- 2006 234 076**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present invention relates to methods for preparing a (meth)acrylic pigmented film, a marking film, and a receptor sheet.

BACKGROUND

Pigmented films are used, for example, as a substrate for a marking film or receptor sheet in the field of interior decorative materials of housings and buildings, surface ornamental materials for fittings, and automobile interior and exteriors, etc.

A vinyl chloride resin has been widely used in the past as a film forming resin, since it has a good balance between tensile strength and elongation characteristics. In recent years, however, a development of alternative resins has been desired due to environmental concerns with respect to a vinyl chloride resin. As one of the alternative resins, an acrylic resin is considered. However, when an acrylic resin is simply processed into a film, the resulting film cannot be used as a substrate for a marking film, etc., since the film is too hard and brittle. Japanese Unexamined Patent Publication (kokai) No. 2006-241270 discloses a (meth)acrylic film comprising an acidic group-containing (meth)acrylic polymer and a basic group-containing (meth)acrylic polymer. In the (meth)acrylic resin composition used for the film, acidic group and basic group in the polymers forms a strong acid-base bonding, which enables compatibility of the polymers and imparts toughness of the film.

When a film forming resin is colored, the film forming resin can be directly compounded with a pigment. However, it is difficult to adjust a color and it takes too much time to disperse a pigment. Therefore, a pigmented film has been obtained by preparing a pigment concentrate in which a pigment is dispersed in a dispersant, and then adding the pigment concentrate in a desired ratio into a film forming resin. However, it is difficult to control the dispersibility of a pigment in a dispersant, and when the dispersibility is not sufficient, problems occur such that the viscosity of the pigment concentrate rises over a period of time. In order to improve dispersibility of a pigment and dispersant, Japanese Patent No. 2927701 discloses a dispersant for a pigment used in a non-aqueous coating comprising a methacrylic copolymerized product. Japanese Patent No. 3236767 discloses a pigment concentrate consisting of a dispersant of a (meth)acrylic acid ester polymer and a pigment. Further, Japanese Patent No. 3811015 discloses a coating composition comprising an acrylic polyol having a high acid number in which a pigment is dispersed, an acrylic polyol having a low acid number, and a curing agent.

However, these references do not include description of adding a pigment concentrate comprising a pigment and dispersant into a (meth)acrylic film comprising an acidic group-containing (meth)acrylic polymer and a basic group-containing (meth)acrylic polymer. In general, it is difficult to control compatibility of a pigment concentrate in a film forming resin. In addition, it is further difficult to control compatibility of a pigment concentrate in a (meth)acrylic film comprising an acidic group-containing (meth)acrylic polymer and a basic group-containing (meth)acrylic polymer, since it comprises both an acidic polymer and a basic polymer. There is no pigment concentrate that presents sufficient compatibility to both the polymers, and therefore various problems such as gelation, color separation, insufficient dispersibility of pigment, migration of a dispersant onto a film surface, lowered weatherability, inconsistent printing properties on a film surface, etc. have occurred.

SUMMARY

The present application is directed to solve the above problems. The object of the present invention is to provide methods for preparing a (meth)acrylic pigmented film having superior pigment dispersibility, and a high tensile strength and elongation characteristics.

The present invention provides the following items:

1. A method for preparing a (meth)acrylic pigmented film, comprising
forming a pigment concentrate by dispersing a pigment into a dispersant selected from the group consisting of a (meth)acrylic polymer containing a unit derived from a hydroxyl group-containing monomer and a (meth)acrylic polymer containing a unit derived from an amino group-containing monomer, and
mixing the pigment concentrate with a (meth)acrylic polymer containing a unit derived from a carboxyl group-containing monomer and a (meth)acrylic polymer containing a unit derived from an amino group-containing monomer.

2. The method according to item 1, wherein the (meth)acrylic polymer containing a unit derived from a carboxyl group-containing monomer and the (meth)acrylic polymer containing a unit derived from an amino group-containing monomer are cross-linked with a cross-linking agent having a functional group capable of reacting with both or either of said carboxyl group and/or said amino group.

3. The method according to item 1 or 2, wherein the (meth)acrylic polymer containing a unit derived from a carboxyl group-containing monomer has a glass transition temperature (Tg) of 0°C or higher, and the (meth)acrylic polymer containing a unit derived from an amino group-containing monomer has a glass transition temperature (Tg) of 0°C or lower.

4. The method according to item 1 or 2, wherein the (meth)acrylic polymer containing a unit derived from a carboxyl group-containing monomer has a glass transition temperature (Tg) of 0°C or lower, and the (meth)acrylic polymer containing a unit derived from an amino group-containing monomer has a glass transition temperature (Tg) of 0°C or higher.

5. A method for preparing a marking film comprising
providing a (meth)acrylic pigmented film according to the method any one of items 1 to 4, wherein the (meth)acrylic pigmented film has a front surface and a backside surface opposite to the front surface,
laminating a second (meth)acrylic pigmented film laminated onto the front surface of the (meth)acrylic pigmented film, and
adhesively disposing an adhesive layer on the backside surface of the (meth)acrylic pigmented film.

6. A method for-preparing a receptor sheet useful for forming a marking film, comprising
providing a (meth)acrylic pigmented film according to the method of any one of items 1 to 4, and
adhesively disposing an adhesive layer on the backside surface of the (meth)acrylic pigmented film. >

BRIEF DESCRIPTION OF DRAWINGS

Fig. 1 is a schematic cross-sectional view of a marking film obtainable by the method of the present invention.
Fig. 2 is a schematic cross-sectional view of a receptor sheet obtainable by the method of the present invention.

DETAILED DESCRIPTION

The (meth)acrylic pigmented film obtainable by the method of the present invention has toughness, and both high tensile strength and elongation characteristics. Further, it becomes easy to adjust color of the film by preliminarily preparing a pigment concentrate, and dispersibility of a pigment is superior. The (meth)acrylic pigmented film is excellent in compatibility between a dispersant and a film forming resin, and therefore deterioration of printing properties due to gelation, color separation, migration of dispersant to a film surface, etc. can be inhibited.
A (meth)acrylic pigmented film obtainable by the method of the present invention comprises a film forming resin comprising a carboxyl group-containing (meth)acrylic polymer and an amino group-containing (meth)acrylic polymer. In the film, a dispersant selected from the group consisting of a hydroxyl group-containing (meth)acrylic polymer and an amino group-containing (meth)acrylic polymer, and a pigment concentrate comprising a pigment dispersed in the dispersant are added. Incidentally, the term "(meth)acrylic" means acrylic or methacrylic.
One method for producing the above carboxylic group-containing (meth)acrylic polymer is to copolymerize a monoethylenic unsaturated monomer and a carboxylic group-containing unsaturated monomer. One method for producing the above amino group-containing (meth)acrylic polymer is to copolymerize a monoethylenic unsaturated monomer and an amino group-containing unsaturated monomer.
One method for producing a hydroxyl group-containing (meth)acrylic polymer used in a pigment concentrate is to copolymerize a monoethylenic unsaturated monomer and a hydroxyl group-containing unsaturated monomer. An amino group-containing (meth)acrylic polymer used in a pigment concentrate can be produced in the same way as the amino group-containing (meth)acrylic polymer used in a film forming resin.
These polymerizations are preferably carried out by radical polymerization. In this case, known polymerization methods such as solution polymerization, suspension polymerization, emulsion polymerization or bulk polymerization can be used. Examples of initiators used include organic peroxides such as benzoyl peroxide, lauroyl peroxide and bis(4-tertiary-butyl cyclohexyl) peroxydicarbonate, and azo-based polymerization initiators such as 2,2'-azobisisobutyronitrile, 2,2'-azobis- 2-methylbutyronitrile, 4,4'-azobis-4-cyanovaleric acid, 2,2'-azobis(2-methylpropionic acid) dimethyl and azobis-2,4-dimethylvaleronitrile (AVN). The amount of these initiators used should be 0.05 to 5 parts by weight per 100 parts by weight of monomer mixture.

The monoethylenically unsaturated monomer that composes the (meth)acrylic polymer is the main component of that polymer. It is typically represented with the formula $CH_2=CR^1COOR^2$, wherein $R^1$ represents a hydrogen atom or methyl group and $R^2$ represents a linear, cyclic or branched alkyl group, phenyl group, alkoxyalkyl group or phenoxyalkyl group, hydroxyalkyl group or cyclic ether group. Examples of such monomers include alkyl (meth)acrylate such as methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, cyclohexyl (meth)acrylate. Further, phenoxyalkyl (eth)acrylates such as phenoxyethyl (meth)acrylate, alkoxyalkyl (meth)acrylates such as methoxypropyl (meth)acrylate and 2-methoxybutyl (meth)acrylate, hydroxyalkyl(meth)acrylate such as 2-hydroxyethyl (meth)acrylate, 2-hydroxypropyl (meth)acrylate and 4-hydroxybutyl (meth)acrylate, and cyclic ether containing (meth)acrylate such as glycidyl (meth)acrylate, tetrahydrofurfuryl (meth)acrylate can be used. As a mono-ethylenically unsaturated monomer, aromatic vinyl monomers such as styrene, $\alpha$-methyl styrene or vinyl toluene, or vinyl esters such as vinyl acetate can be used. In order to obtain a desired property, one or more types of mono-ethylenically unsaturated monomers can be used depending on the purpose. These mono-ethylenically unsaturated monomers are used in polymerizations of a carboxyl group-containing (meth)acrylic polymer, an amino group-containing (meth)acrylic polymer, and a hydroxyl group-containing (meth)acrylic polymer.

In the film forming resin used in the present invention, in case a glass transition temperature (Tg) of the carboxyl group-containing (meth)acrylic polymer is controlled to 0°C or higher, Tg of the amino group-containing (meth)acrylic polymer is preferably controlled to 0°C or lower. In case Tg of the former is controlled to 0°C or lower, Tg of the latter is preferably controlled to 0°C or higher. Without sticking to the following theory, the (meth)acrylic polymer having high Tg enables the resulting film to exhibit high tensile strength, while the (meth)acrylic polymer having low Tg improves elongation characteristics at low temperature, and therefore a (meth)acrylic pigmented film having an excellent balance between tensile strength and elongation characteristics can be obtained. A (meth)acrylic polymer having Tg of 0°C or higher can be obtained by copolymerizing a mono-ethylenically unsaturated monomer having homopolymer Tg of 0°C or higher, for example, methyl methacrylate (MMA), n-butyl methacrylate (BMA) or the like as a main component.

A (meth)acrylic polymer having Tg of 0°C or lower can be obtained easily by copolymerizing a component, wherein a homopolymer of the component obtained by homopolymerization has Tg of 0°C or lower, for example, ethyl acrylate (EA), n-butyl acrylate (BA), 2-ethylhexyl acrylate (2EHA) or the like as a main component.

The film forming resin can also be formed by mixing one or two or more carboxylic group-containing (meth)acrylic polymers and one or two or more amino group-containing (meth)acrylic polymers.

The weight-average molecular weight of the polymers is selected in consideration of a balance of various performance characteristics of the film formed from the polymers. The weight-average molecular weight is usually 10,000 or more, preferably 50,000 or more, and more preferably 100,000 or more. If the weight-average molecular weight is too high, a viscosity of the polymer becomes high and thus it becomes difficult to coat the polymer during a film production. On the other hand, if the weight-average molecular weight becomes too low, detrimental influences with respect to film tensile strength, elongation characteristics, weatherability, etc. occur. Incidentally, the weight-average molecular weight means a molecular weight relative to polystyrene standards using a Gel Permeation Chromatography (GPC) method.

Examples of unsaturated monomers containing a carboxyl group that compose a carboxyl group-containing (meth)acrylic polymer by copolymerizing with the monoethylenic unsaturated monomer include unsaturated carboxylic acids (such as acrylic acid, methacrylic acid), unsaturated dicarboxylic acids (such as maleic acid, itaconic acid), $\omega$-carboxy polycaprolactone monoacrylate, phthalic acid monohydroxyethyl (meth)acrylate, $\beta$-carboxyethyl acrylate, 2-(meth)acryloyloxy ethyl succinate and 2-(meth)acryloyloxy ethyl hexahydrophthalate.

It is preferred to obtain a carboxyl group-containing (meth)acrylic polymer by copolymerizing a monoethylenically unsaturated monomer specifically within the range of 80 to 95.5 parts by weight as a main component, with a carboxyl group-containing unsaturated monomer within the range of 0.5 to 20 parts by weight. Other monomers can be added to copolymerizing the above monomers, as far as the effect of the present invention is not impaired.

Examples of amino group-containing unsaturated monomers that compose the amino group-containing (meth)acrylic polymer by copolymerizing with the monoethylenic unsaturated monomer include dialkylamino alkyl (meth)acrylates such as N,N-dimethylamino ethyl acrylate (DMAEA) and N,N-dimethylamino ethyl methacrylate (DMAEMA), dialkylamino alkyl (meth)acrylamides such as N,N-dimethylamino propyl acrylamide (DMAPAA) and N,N-dimethylamino propyl methacrylamide, and dialkylamino alkyl vinyl ethers such as N,N-dimethylamino ethyl vinyl ether and N,N-diethylamino ethyl vinyl ether, and a mixture thereof. Other examples of unsaturated monomers containing an amino group include monomers having a tertiary amino group such as vinyl monomers having a nitrogen-containing hetero ring such as vinyl pyridine and vinyl imidazole, and styrenes having a tertiary amino group (such as 4-(N,N-dimethylamino)-styrene, 4-(N,N-diethylamino)-styrene). Among unsaturated monomers having an amino group, unsaturated monomers having a tertiary amino group are preferably used.

It is preferred to obtain the amino group-containing (meth)acrylic polymer by copolymerizing a monoethylenically unsaturated monomer specifically within the range of 80 to 95.5 parts by weight as a main component with an amino group-containing unsaturated monomer within the range of 0.5 to 20 parts by weight. If the amount of the amino group-containing unsaturated monomer is too low, the amino group-containing (meth)acrylic polymer will have inferior compatibility with the carboxyl group-containing (meth)acrylic polymer. Further, other monomers can be added to copolymerize the above monomers, as far as the effect of the present invention is not impaired.

The pigment concentrate used in the present invention comprises a dispersant selected from the group consisting of a hydroxyl group-containing (meth)acrylic polymer and an amino group-containing (meth)acrylic polymer, and a pigment dispersed in the dispersant.

Examples of the hydroxyl group-containing monomer for preparing a hydroxyl group-containing (meth)acrylic polymer as the dispersant by polymerization include hydroxyalkyl (meth)acrylates (such as 2-hydroxyethyl (meth)acrylate, 3-hydroxypropyl (meth)acrylate, 2-hydroxypropyl (meth)acrylate and 4-hydroxybutyl (meth)acrylate), glycerin mono(meth)acrylate, 2-hydroxy-3-phenoxypropyl (meth)acrylate, and "Placcel F" series (manufactured by Dicel Chemical Industries, Ltd.) as polycaprolactone-modified products of 2-hydroxyethyl (meth)acrylate. One or more kinds of these monomers can be used.

The hydroxyl group-containing (meth)acrylic polymer is preferably obtained by copolymerizing 80 to 95.5 parts by weight of the monoethylenically unsaturated monomer as a main component with 0.1 to 20 parts by weight of the hydroxyl group-containing unsaturated monomer. Other monomers can be added to copolymerizing the above monomers, as far as the effect of the present invention is not impaired. It is preferred to add a carboxyl group-containing unsaturated monomer, since it is superior in compatibility with the film forming resin.

The amino group-containing (meth)acrylic polymer for the dispersant can be prepared in the same way as the amino group-containing (meth)acrylic polymer for the film forming resin. In addition, it can be the same polymer as the amino group-containing (meth)acrylic polymer for the film forming resin. If the amino group-containing (meth)acrylic polymers for the dispersant and the film forming resin are the same, it is believed that a (meth)acrylic pigmented film having a good compatibility of a dispersant and a film forming resin can be obtained, and as a result, migration of the dispersant can be inhibited to improve printability and weatherability of the resulting (meth)acrylic pigmented film.

The weight-average molecular weight of the polymers is selected in consideration of a balance of various performance characteristics of the dispersant formed from the polymers. The weight-average molecular weight is usually 10,000 or more, preferably 30,000 or more, and more preferably 50,000 or more. If the weight-average molecular weight is too high, a viscosity of the polymer becomes high and thus it becomes difficult to disperse a pigment in the polymer. On the other hand, if the weight-average molecular weight becomes too low, the dispersant may migrate to the film surface.

As a pigment dispersed in the dispersant, known pigments (including organic pigments and inorganic pigments) conventionally used in various fields can be used. Examples of inorganic pigments include, for example, zinc carbonate, zinc oxide, zinc sulfide, talc, kaolin, calcium carbonate, titanium oxide, silica, lithium fluoride, calcium fluoride, barium sulfate, alumina, zirconia, calcium phosphate, etc. Examples of organic pigments include phthalocyanine, azo, condensed azo, azo-lake, anthraquinone, perylene-perynone, indigo-thioindigo, isoindolinone, azo-methine-azo, dioxadine, quinaquridone, aniline black, triphenyl methane, and carbon black pigments. These can be used alone or in combination. When some pigments are mixed, each of pigments is preferably dispersed in a dispersant to prepare some pigment concentrates, and then they are added to a film forming resin. Dispersibilities of pigments in a dispersant may be different from each other, and thus it is easier to prepare each of pigment concentrates separately. In such a case, an amino group-containing (meth)acrylic polymer may be used as a dispersant for one pigment and a hydroxyl group-containing (meth)acrylic polymer may be used as another pigment. When an inorganic pigment such as titanium dioxide is dispersed, an amino group-containing (meth)acrylic polymer is preferably used as a dispersant, since it has higher inorganic pigment dispersibility than a hydroxyl group-containing (meth)acrylic polymer.

The above pigment concentrate can be obtained by dispersing a pigment in the above dispersant dissolved in a solvent, or by dispersing a pigment in a dispersant and then adding a solvent thereto. A solvent used is preferably a solvent which can dissolve a dispersant and does not disturb dispersibility of a pigment. The dispersant is used in an amount of 10 to 1000 parts by weight with respect to 100 parts by weight of the pigment.

After the film forming resin and the pigment concentrate are prepared as described above, a (meth)acrylic pigmented film obtainable by the method of the present invention can be formed by a conventional film forming method. Specifically, the film can be formed by mixing a solution of the film forming resin and a solution of the pigment concentrate, optionally adding a volatile solvent such as toluene or ethyl acetate to adjust a viscosity of the solution, applying the mixed solution on the release surface of a liner, and solidifying the solution with drying. As a coating device, there can be used conventional coaters such as bar coater, knife coater, roll coater, and die coater. Also the (meth)acrylic pigmented film can be formed by a melt extrusion method.

A film having desired tensile strength and elongation characteristics can be obtained by changing a mixing ratio of each of the (meth)acrylic polymers in the formation of the film. Specifically, with each of (meth)acrylic polymers, a mixing ratio of a polymer having Tg higher than 0°C to a polymer having Tg lower than 0 °C is preferably within a range from 10:90 to 90:10, more preferably from 20:80 to 90:10, yet more preferably from 30:70 to 90:10, and most preferably 50:50 to 90:10. It is preferable to use higher amount of the polymer having higher Tg, since higher amount of the polymer having lower Tg is used for the films, a problem may occur that they stick together (blocked), and not easily released during storage of stacked films.

The (meth)acrylic pigmented film obtainable by the method of the present invention can be cross-linked by a cross-linking agent capable of reacting with a carboxyl group and a amino group. Cross-linking contributes to improving solvent resistance. As a cross-linking agent containing functional groups that can react with carboxylic groups, bisamide cross-linking agents (for example, 1,1'-isophthaloyl-bis(2-methylaziridine), aziridine cross-linking agents (for example, Chemitite PZ33 made by Nippon Shokubai, NeoCryl CX-100 made by Avecia) carbodiimide cross-linking agents (for example, Carbodilite V-03, V-05, V-07 made by Nisshinbo), epoxy cross-linking agents (for example, E-AX, E-5XM, E5C made by Soken Chemical & Engineering), isocyanate cross-linking agents (for example, Coronate Land Coronate HK made by Nippon Polyurethane, Desmodur H, Desmodur W and Desmodur I made by Bayer) can be used. An amount of the cross-linking agent is from 0.01 to 0.5 equivalents : to a carboxyl group in the carboxyl group-containing (meth)acrylic polymer.

On the other hand, a cross-linking agent containing functional groups that can react with amino groups includes epoxy cross-linking agents (for example, E-AX, E-5XM, E5C made by Soken Chemical & Engineering), isocyanate cross-linking agents (for example, Coronate L and Coronate HK made by Nippon Polyurethane, Desmodur H, Desmodur W and Desmodur I made by Bayer). An amount of the cross-linking agent is from 0.01 to 0.5 equivalents to the amino group-containing monomer.

One or more additives among conventionally known additives, such as antioxidants, ultraviolet absorbing agents, light stabilizers, plasticizers, lubricants, antistatic agents, flame-retardant and fillers may be used in the (meth)acrylic pigmented film, depending on application thereof.

In the (meth)acrylic film obtainable by the method of the present invention, the tensile strength at break at 20°C is preferably 4N/25mm or more, and more preferably 10N/25mm or more. When the tensile strength is less than 4N/25mm, there arises a problem that the resulting film is likely to be broken when applied on an adherend. In the (meth)acrylic film obtainable by the method of the present invention, the elongation at 20°C is preferably 25% or more, more preferably 50% or more, and most preferably 75% or more. When the elongation is less than 25%, there arises a problem that the resulting film is likely to be broken when applied on the adherend.

The thickness of the (meth)acrylic pigmented film obtainable by the method of the present invention is not specifically limited and can be controlled to the same thickness as that of a conventional decorative sheet. Specifically, the thickness is generally within a range from 1 to 1000 $\mu$m, preferably from 5 to 500 $\mu$m, and more preferably from 20 to 200 $\mu$m. When the thickness is too small, the mechanical strength decreases and the resulting film is likely to be broken when the film is peeled after bonding to the adherend. On the other hand, when the thickness is too large, the flexibility of the film is likely to be deteriorated.

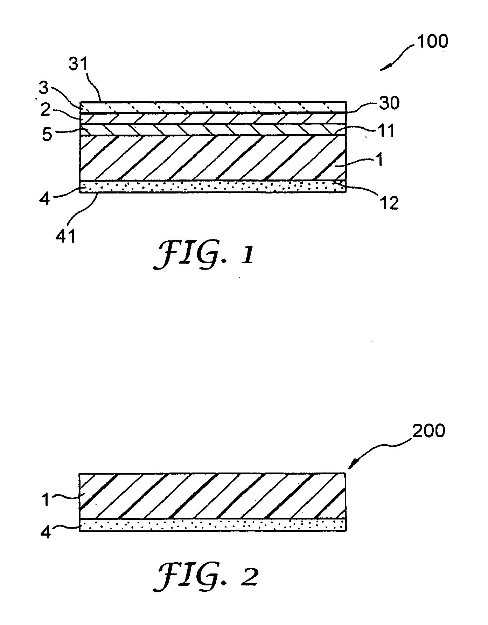

A preferred example of a marking film using the (meth)acrylic pigmented film obtainable by the method of the present invention is explained in reference to Fig.1. Fig.1 shows a schematic view of a marking film. A (meth)acrylic pigmented film (1) in a marking film (100) has a first surface (11) and a second surface (12). On the first surface (11), a second (meth)acrylic pigmented film can be laminated. For example, the (meth)acrylic pigmented film is a white film and on the first surface, a second (meth)acrylic pigmented film colored with a different color may be laminated.

Instead of the second (meth)acrylic pigmented film, the first surface (11) may receive a pigment concentrate. The pigment concentrate is typically toner or ink. One or more pigment concentrates form an image layer. The pigment concentrates can be applied in a continuous or incontinuous manner for information provision or decoration. The pigment concentrates composing the image layer can be applied on the (meth)acrylic pigmented film by any printing method or coloring method. For example, it can be a solvent-based ink-jet printing, an electrostatic recording toner printing method, a silkscreen printing.

In order to inhibit dropping of the pigment concentrate from the (meth)acrylic pigmented film or to protect the film surface, a protective film (3) can be disposed on the marking film surface. In this case, the pigment concentrate etc. forms an image which can be viewed from the upper most surface (31) of the protective film (3) through the film (3). Further, a receptor layer (5) can be disposed on the first surface (11) of the (meth)acrylic pigmented film (1) to reinforce adhesion between the pigment concentrate (2) and the (meth)acrylic pigmented film (1).

On the second surface (12) of the (meth)acrylic pigmented film (1), an adhesive layer (4) is fixedly provided. The adhesive layer usually forms a flat adhesive surface, but it may have an uneven adhesive surface. On the uneven adhesive surface (41) of the adhesive layer (4), a protruding portion and a recessed portion surrounding the protruding portion are formed and a communicating passage in communication with the outside is defined by the space between the recessed portion of the adhesive surface (41) and the surface of the adherend in the state of being bonded to the adherend.

As the (meth)acrylic pigmented film (1), the (meth)acrylic pigmented film of this example is used.

The entire protective film (3) has light transmission properties. The light transmission is usually 60% or more, preferably 70% or more, and particularly preferably 80% or more. The term "light transmission" as used herein means an entire light transmission as measured by a spectrophotometer or, a color meter which also serves as a photometer, using light having a wavelength of 550 nm.

The protective film (3) is preferably made of a resin film containing high transparency. The resin of the resin film includes, for example, fluororesin, phthalate polyester (e.g. PET and PEN), acrylic resin, and petroleum-resistant resin. The thickness of the protective film is usually within a range from 5 to 120 μm, and preferably from 10 to 100 μm.

The resin comprising the receptor layer (5) is not specifically limited and there can be used acrylic polymer, polyolefin, polyvinyl acetal and phenoxy resin. The glass transition temperature of the resin comprising the receptor layer is usually within a range from 0 to 100°C. When the glass transition temperature of the receptor layer is too high, the toner transferrability is lowered and a clear image may not be obtained. Furthermore, when the glass transition temperature of the receptor layer is too high, the flexibility of the entire marking film may be lowered. The glass transition temperature of the receptor layer is preferably adjusted to 0°C or higher in order to effectively lower tack at normal temperature of the surface of receiving the pigment concentrate. Consequently, it is made possible to effectively prevent sticking of marking film precursors and receptor sheets before coating with the protective film. Therefore, after being stored in the form of a roll, the roll can be used easily while unwinding. The thickness of the receptor layer is usually within a range from 20 to 50 μm, and preferably from 5 to 40 μm.

The adhesive of the adhesive layer (4) is not specifically limited and is usually a pressure-sensitive adhesive containing a tacky polymer. As the pressure-sensitive adhesive layer, for example, a single-layered pressure-sensitive adhesive film containing a tacky polymer and a double-coated adhesive sheet comprising two pressure-sensitive layers are preferably used.

The adhesive layer (4) can be made of a coating film of an adhesive containing a tacky polymer. Preferable adhesive comprises a tacky polymer and a cross-linking agent for cross-linking the adhesive polymer. The term "tacky polymer" used herein refers to a polymer which exhibits adhesion at normal temperature (about 25°C). As the tacky polymer, for example, acrylic polymer, polyurethane, polyolefin and polyester can be used.

A marking film (100) containing the pigment concentrate can be produced in the following manner. First, the above-mentioned (meth)acrylic pigmented film (1) is prepared. In case the marking film (100) includes a receptor layer (5), the receptor layer is formed on the liner and the (meth)acrylic pigmented film is then laminated on the receptor layer with the liner. In this case, as far as the effect of the present invention is not impaired, other layers, for example, a primer layer or an adhesive layer may be provided between the (meth)acrylic pigmented film (1) and the receptor layer (5).

Then, an adhesive layer (4) is made to come closely into contact with the backside surface of the (meth)acrylic pigmented film (1). A coating solution containing an adhesive is applied on the release surface of the liner and dried to form an adhesive layer with the liner, and then the adhesive layer with the liner is laminated on the backside surface of the (meth)acrylic pigmented film (1), thereby making the adhesive layer come closely into contact with the backside surface of the (meth)acrylic film.

Then, an image is formed on the surface of the (meth)acrylic pigmented film (1) and a protective film (3) is optionally provided thereon, thereby making it possible to complete the marking film (100) obtainable by the method of the present invention. In case an image is formed by transferring the pigment concentrate onto the surface of the (meth)acrylic film (1), the image is formed by transferring a toner or an ink using a conventional printing method. In case of using an electrostatic printing method, an image is temporarily formed on a temporary carrier referred to as a transfer medium and the image is then transferred onto the surface of the (meth)acrylic film (1) by heating under pressure.

The thickness of the marking film is usually within a range from 30 to 1500 μm, preferably from 50 to 950 μm. When the thickness is too small, the mechanical strength decreases and the marking film is likely to be broken when peeled again after bonding to the adherend. On the other hand, when the thickness is too large, the flexibility of the marking film is likely to be lowered.

A preferred example of a receptor sheet obtainable by the method of the present invention will be explained with reference to Fig.2.

The receptor sheet (200) obtainable by the method of the present invention is a film with an adhesive layer, which comprises the (meth)acrylic pigmented film to which pigment concentrates such as toner are applied, and an adhesive layer which bonds the (meth)acrylic film to an adherend. That is, the receptor sheet does not include the protective film (3) of the above-mentioned marking film and is composed of the (meth)acrylic pigmented film (1) and the adhesive layer (4). Therefore, the (meth)acrylic pigmented film and the adhesive layer can have the same constitution as that of the marking film, and also the same formation methods can be used.

The total thickness of the receptor sheet is usually within a range from 5 to 1200 μm, and preferably from 25 to 700 μm.

EXAMPLES

The following provides a more detailed explanation of the present invention based on examples thereof, but the present invention is not limited by the examples.

1. Preparation of (Meth)acrylic Polymer

1.1 Acrylic Resin 1

First, 60 parts by weight of methyl methacrylate (MMA), 34 parts by weight of n-butyl methacrylate (BMA) and 6 parts by weight of dimethylamino ethyl methacrylate (DMAEMA) were dissolved in 150 parts by weight of ethyl acetate, and after adding 0.6 parts by weight of polymerization initiator, dimethyl-2,2'-azobis(2-methyl proprionate) (made by Wako Pure Chemical Industries, Co., Ltd., trade name V-601), the mixture was allowed to react for 24 hours at 65°C in a nitrogen atmosphere to prepare an ethyl acetate solution of Acrylic Resin 1 (solid contents: 39%). It had a weight average molecular weight (Mw) of 68,000 and Tg of 63°C. Tg was calculated by the FOX's equation (following equation):

$$1/Tg = X1/(Tg1 + 273.15) + X2/(Tg2 + 273.15) + ...... + Xn/(Tgn + 273.15)$$

where Tg1 denotes a glass transition point of a homopolymer as a component 1,

Tg2 denotes a glass transition point of a homopolymer as a component 2,
X1 denotes a weight fraction of a monomer as a component 1 added during the polymerization,
X2 denotes a weight fraction of a monomer as a component 2 added during the polymerization, and
X1 + X2 + ...... + Xn = 1, on the assumption that the respective polymers are copolymerized from n kinds of monomers.

1.2 Acrylic Resin 2

94 parts by weight of butyl acrylate (BA) and 6 parts of acrylic acid (AA) were dissolved in a mixed solvent of 100 parts by weight of toluene and 100 parts by weight of ethyl acetate, and after adding 0.2 parts by weight of polymerization initiator, azobis(2,4-dimethylvaleronitrile) (made by Wako Pure Chemical Industries, Co., Ltd., trade name V-65), the mixture was allowed to react for 24 hours at 50°C in a nitrogen atmosphere to prepare a mixed toluene/ethyl acetate solution of Acrylic Resin 2 (solid contents: 33%). Acrylic Resin 2 had a weight average molecular weight (Mw) of 760,000 and a glass transition point of -48°C.

1.3 Acrylic Resin 3

96 parts by weight of BA, 6 parts of acrylic acid (AA) and 0.5 parts by weight of hydroxyethyl acrylate were dissolved in a mixed solvent of 70 parts by weight of toluene and 70 parts by weight of ethyl acetate, and after adding 0.2 parts by weight of polymerization initiator, azobis(2,4-dimethylvaleronitrile) (made by Wako Pure Chemical) Industries, Co., Ltd., trade name V-65), the mixture was allowed to react for 24 hours at 50°C in a nitrogen atmosphere to prepare a mixed toluene/ethyl acetate solution of Acrylic Resin 3 (solid contents: 42%). Acrylic Resin 3 had a weight average molecular weight (Mw) of 580,000 and a glass transition point of -50°C.

1.4 Acrylic Resin 4

60. parts by weight of BA, 30 parts of 2-ethylhexyl acrylate (2EHA), 5 parts by weight of vinyl acetate (Vac) and 5 parts by weight of MMA were dissolved in 150 parts by weight of ethyl acetate, and after adding 0.2 parts by weight of polymerization initiator, azobis(2,4-dimethylvaleronitrile) (made by Wako Pure Chemical Industries, Co., Ltd., trade name V-65), the mixture was allowed to react for 24 hours at 50°C in a nitrogen atmosphere to prepare a ethyl acetate solution of Acrylic Resin 4 (solid contents: 40%). Acrylic Resin 4 had a weight average molecular weight (Mw) of 300,000 and a glass transition point of -50°C.

1.5 Acrylic Resin 5

48 parts by weight of MMA, 48 parts of *iso*-butyl methacrylate (iBMA) and 4 parts by weight of methacrylic acid (MAA) were dissolved in 150 parts by weight of ethyl acetate, and after adding 0.6 parts by weight of polymerization initiator, dimethyl-2,2'-azobis(2-methyl proprionate) (made by Wako Pure Chemical Industries, Co., Ltd., trade name V-601), the mixture was allowed to react for 24 hours at 65°C in a nitrogen atmosphere to prepare a ethyl acetate solution of Acrylic Resin 5 (solid contents: 39%). Acrylic Resin 5 had a weight average molecular weight (Mw) of 50,000 and a glass transition point of 86°C.

1.6 Acrylic Resin 6

90 parts by weight of BA, and 10 parts by weight of dimethylamino ethyl acrylate (DMAEA) were dissolved in 100 parts by weight of ethyl acetate, and after adding 0.6 parts by weight of polymerization initiator, dimethyl-2,2'-azobis(2-methyl propionate)(made by Wako Pure Chemical Industries, Co., Ltd., trade name V-601), the mixture was allowed to react for 24 hours at 65°C in a nitrogen atmosphere to prepare a ethyl acetate solution of Acrylic Resin 6 (solid contents: 50%). Acrylic Resin 6 had a weight average molecular weight (Mw) of 250,000 and a glass transition point of -48°C.

2. Preparation of Pigment concentrate

55 parts by weight of methyl isobutyl ketone (MIBK) was added to 15 parts by weight of Acrylic Resin 1 as a dispersant and 30 parts by weight of Pigment 1 (made by DuPont, trade name of TiPure R960, titanium oxide) and then the resulting mixture was agitated for 10 minutes in Paint Shaker (made by Thinky Co., Ltd., trade name of ARE250) to prepare Pigment concentrate 1. Pigment concentrate 1 was allowed to stand at a room temperature for one month, and then a state of the solution was judged by a naked eye. A state of the solution was rated as "good" if it was flowing and not gelled, and "poor" if it was gelled. The result is indicated in Table 1.
Pigment concentrates 2 to 9 were prepared in the same method as that used for Pigment concentrate 1, except that kinds and formulation ratios of dispersants, pigments, and solvents were changed. The following pigments were used. Kinds, formulation ratios and states of solutions are indicated in Table 1.

[Table 1]

|  | Dispersants | Pigments | Formulation ratio Dispersant: Pigment | State of Solution |
|---|---|---|---|---|
| Pigment concentrate 1 | Acrylic Resin 1 | Pigment 1 | 15:30 | Good |
| Pigment concentrate 2 | Acrylic Resin 1 | Pigment 1 | 10:50 | Good |
| Pigment concentrate 3 | Acrylic Resin 1 | Pigment 2 | 15:30 | Good |
| Pigment concentrate 4 | Acrylic Resin 1 | Pigment 3 | 15:10 | Good |
| Pigment concentrate 5 | Acrylic Resin 1 | Pigment 4 | 15:10 | Good |
| Pigment concentrate 6 | Acrylic Resin 3 | Pigment 5 | 10:10 | Good |
| Pigment concentrate 7 | Acrylic Resin 3 | Pigment 6 | 10:10 | Good |
| Pigment concentrate 8 | Acrylic Resin 3 | Pigment 3 | 10:10 | Good |
| Pigment concentrate 9 | Acrylic Resin 3 | Pigment 4 | 10:10 | Good |
| Pigment concentrate 10 | Acrylic Resin 2 | Pigment 1 | 15:30 | Poor |
| Pigment concentrate 11 | Acrylic Resin 3 | Pigment 1 | 15:30 | Poor |
| Pigment concentrate 12 | Acrylic Resin 4 | Pigment 1 | 15:30 | Poor |
| Pigment concentrate 13 | Acrylic Resin 2 | Pigment 2 | 15:30 | Poor |
| Pigment concentrate 14 | Acrylic Resin 6 | Pigment 1 | 10:50 | Good |

Pigment 1: made by DuPont, trade name of TiPure R960, titanium oxide,
Pigment 2: made by Ishihara Sangyo Co., Ltd., trade name of CR90, titanium oxide,
Pigment 3: made by Dainichi Color & Chemicals Mfg Co., Ltd., trade name of Phthalocyanine Green 2GNL,
Pigment 4: made by Dainichi Color & Chemicals Mfg Co., Ltd., trade name of Phthalocyanine Blue 4982,
Pigment 5: made by Ciba Specialty Chemicals, trade name of IRGAZIN (TM) DPP RED B0, and
Pigment 5: made by Ciba Specialty Chemicals, trade name of IRGAZIN (TM) Yellow 2GLTE.

Example 1

Pigment concentrate 2 and, as a film forming resin, Acrylic Resin 1 and Acrylic Resin 2 were prepared. Next, Pigment concentrate 2, Acrylic Resin 1 and Acrylic Resin 2 were mixed so that 100 parts by weight of Acrylic Resin 1 (including Acrylic Resin 1 in Pigment concentrate 2), 100 parts by weight of Acrylic Resin 2, and 100 parts by weight of Pigment 1 were present in the mixture. 5 parts by weight of a cross-linking agent (made by Soken Chemical Co., Ltd.,

EP 2 115 048 B1

trade name of E-AX, epoxy cross-linking agent, toluene solution having solid contents of 5%) was added to the mixture with respect to 100 parts by weight of Acrylic Resin 2. Compatibility of the pigment concentrate and the film forming resin was good. Compatibility was rated as "good", if no gelation, color separation or precipitation of pigment was observed by viewing with a naked eye, and "poor", if gelation, color separation or precipitation of pigment was observed. The resulting mixture was coated on $50\mu$m release-treated polyester film with a knife coater and dried at 95°C for 5 minutes and 155°C for 2 minutes to obtain $50\mu$m thick (meth)acrylic pigmented film.

Tensile strength and elongation of the (meth)acrylic pigmented film was measured under the following conditions. The result is indicated in Table 2.

An oblong test sample having a length of 150mm and width of 25mm was cut from the film, and a measurement of the sample was started from an initial holding distance of 100mm in a Tensilon tensile tester. An extension rate was 300mm/min and measurement temperature was 20°C. The measurement results were summarized as follows.

Tensile Strength (at beak) (unit: N/25mm)

Tensile Strength (at beak) was a tension when the measurement sample was broken.

Tensile Strength (at yield point) (unit: N/25mm)

Tensile Strength (at yield point) was a tension when the measurement sample was yielded.

Elongation E (unit: %)

A distance between referential lines (L1) (unit: mm) when the measurement sample was broken, was measured and the elongation was calculated from the following formula using the initial holding distance of 100mm.

$$E=(L1-100)/100*100$$

Next, an ethyl acetate solution of an acrylic pressure-sensitive adhesive consisting of isooctyl acrylate (IOA)/methyl acrylate (MA)/acrylic acid (AA) copolymer having a composition ratios of 70/22.5/7.5 (weight ratio) was prepared.. The copolymer had a weight average molecular weight of 360,000 and Tg of -7°C. To this solution, 1.7 parts by weight (solid contents basis) of bis-amide cross-linking agent ((1,1'-isophtharoyl-bis(2-methyl aziridine), solid contents of 10% in toluene solution) with respect to 100 parts by weight of the acrylic pressure-sensitive adhesive was added to prepare a pressure-sensitive adhesive composition. This pressure-sensitive adhesive composition was coated onto a release sheet based on paper with double-sided laminate of polyethylene by a knife coater to form a layer having $30\mu$m dry thickness, and heated at 90°C for 5 minutes to dry and cross-link the layer. Then, the above-mentioned (meth)acrylic pigmented film was dry-laminated to the obtained release sheet having an adhesive thereon such that the adhesive is in contact with the film to form a receptor sheet consisting of release sheet/adhesive layer/(meth)acrylic pigmented film.

Example 2

A (meth)acrylic pigmented film and a receptor sheet were obtained by the same method as in Example 1 except for the following points. Pigment concentrate 3 and, Acrylic Resin 1 and Acrylic Resin 2 were mixed so that 100 parts by weight of Acrylic Resin 1 (including Acrylic Resin 1 in Pigment concentrate 3), 100 parts by weight of Acrylic Resin 2, and 100 parts by weight of Pigment 2 were present in the mixture. 0.5 parts by weight of the same bis-amide cross-linking agent as one used in the pressure-sensitive adhesive of Example 1 was added to the mixture with respect to 100 parts by weight of Acrylic Resin 2. Compatibility, tensile strength and elongation are indicated in Table 2.

Example 3

A (meth)acrylic pigmented film and a receptor sheet were obtained by the same method as in Example 1 except for the following points. Pigment concentrate 6 and, Acrylic Resin 1 and Acrylic Resin 2 were mixed so that 100 parts by weight of Acrylic Resin 1, 65 parts by weight of Acrylic Resin 2, 25 parts by weight of Acrylic Resin 3 and 25 parts by weight of Pigment 5 were present in the mixture. 0.7 parts by weight of the bis-amide cross-linking agent was added to the mixture with respect to 100 parts by weight of Acrylic Resin 2. Compatibility, tensile strength and elongation are indicated in Table 2.

Example 4

A (meth)acrylic pigmented film and a receptor sheet were obtained by the same method as in Example 1 except for the following points. Pigment concentrate 7 and, Acrylic Resin 1 and Acrylic Resin 2 were mixed so that 100 parts by weight of Acrylic Resin 1, 65 parts by weight of Acrylic Resin 2, 25 parts by weight of Acrylic Resin 3 and 25 parts by weight of Pigment 6 were present in the mixture. 0.7 parts by weight of the bis-amide cross-linking agent was added

**10**

to the mixture with respect to 100 parts by weight of Acrylic Resin 2. Compatibility, tensile strength and elongation are indicated in Table 2.

Example 5

A (meth)acrylic pigmented film and a receptor sheet were obtained by the same method as in Example 1 except for the following points. Pigment concentrate 2, Pigment concentrate 6, Acrylic Resin 1 and Acrylic Resin 2 were mixed so that 100 parts by weight of Acrylic Resin 1 (including Acrylic Resin 1 in Pigment concentrate 2), 97 parts by weight of Acrylic Resin 2, 3 parts by weight of Acrylic Resin 3 (including Acrylic Resin 3 in Pigment concentrate 6) and, 22 parts by weight of Pigment 1. and 3 parts by weight of Pigment 5 were present in the mixture. 0.5 parts by weight of the bis-amide cross-linking agent was added to the mixture with respect to 100 parts by weight of Acrylic Resin 2. Compatibility, tensile strength and elongation are indicated in Table 2.

Example 6

A (meth)acrylic pigmented film and a receptor sheet were obtained by the same method as in Example 1 except for the following points. Pigment concentrate 2, Pigment concentrate 7, Acrylic Resin 1 and Acrylic Resin 2 were mixed so that 100 parts by weight of Acrylic Resin 1 (including Acrylic Resin 1 in Pigment concentrate 2), 97 parts by weight of Acrylic Resin 2, 3 parts by weight of Acrylic Resin 3 (including Acrylic Resin 3 in Pigment concentrate 7) and, 22 parts by weight of Pigment 1 and 3 parts by weight of Pigment 5 were present in the mixture. 0.5 parts by weight of the bis-amide cross-linking agent was added to the mixture with respect to 100 parts by weight of Acrylic Resin 2. Compatibility, tensile strength and elongation are indicated in Table 2.

Example 7

Acrylic polyol resin (made by Sumitomo Bayer Urethane Co., Ltd., trade name of Desmophen A365) and HDI isocyanurate (made by Sumitomo Bayer Urethane Co., Ltd., trade name of Sumidur N3300) were mixed so that NCO/OH equivalent became 10 to prepare a protective film resin solution. This resin solution was coated onto $50\mu m$ release-treated polyester film by a wire bar, and dried at 85°C for 5 minutes to obtain $3\mu m$ protective film layer. Next, a mixture of the pigment concentrate and the film forming resin was prepared in the same manner as Example 3, and coated by a knife coater to form a layer having $30\mu m$ dry thickness on the above-mentioned protective film. A layer of second (meth)acrylic pigmented film was obtained by drying the coated layer at 95°C for 5 minutes and at 155°C for 2 minutes. Further, a mixture of the pigment concentrate and the film forming resin was prepared in the same manner as the Example 2, and coated on the above-mentioned second (meth)acrylic pigmented film by a knife coater and dried to form a layer of a (meth)acrylic pigmented film (white). Tensile strength and elongation of (meth)acrylic pigmented film including the protective film layer is indicated in Table 2. In the same manner as the Example 1, a pressure-sensitive adhesive was laminated to form a receptor sheet.

Example 8

A (meth)acrylic pigmented film and a receptor sheet were obtained by the same method as in Example 1 except for the following points. Pigment concentrate 14, Acrylic Resin 5 and Acrylic Resin 6 were mixed so that 100 parts by weight of Acrylic Resin 5, 100 parts by weight of Acrylic Resin 6 (including Acrylic Resin 6 in Pigment concentrate 14) and 100 parts by weight of Pigment 1 were present in the mixture. 0.5 parts by weight of the epoxy cross-linking agent was added to the mixture with respect to 100 parts by weight of Acrylic Resin 5. Compatibility, tensile strength and elongation are indicated in Table 2.

Example 9

A (meth)acrylic pigmented film and a receptor sheet were obtained by the same method as in Example 1 except for the following points. Pigment concentrate 9, Acrylic Resin 5 and Acrylic Resin 6 were mixed so that 100 parts by weight of Acrylic Resin 5, 84 parts by weight of Acrylic Resin 6, 16 parts by weight of Acrylic Resin 3 and 16 parts by weight of Pigment 4 were present in the mixture. 0.5 parts by weight of the epoxy cross-linking agent was added to the mixture with respect to 100 parts by weight of Acrylic Resin 5. Compatibility, tensile strength and elongation are indicated in Table 2.

Example 10

A (meth)acrylic pigmented film and a receptor sheet were obtained by the same method as in Example 1 except for the following points. Pigment concentrate 5, Acrylic Resin 5 and Acrylic Resin 6 were mixed so that 76 parts by weight of Acrylic Resin 5, 100 parts by weight of Acrylic Resin 6, 24 parts by weight of Acrylic Resin 1 and 16 parts by weight of Pigment 4 were present in the mixture. 0.5 parts by weight of the epoxy cross-linking agent was added to the mixture with respect to 100 parts by weight of Acrylic Resin 5. Compatibility, tensile strength and elongation are indicated in Table 2.

[Table 2]

| | (Meth)acrylic pigmented film | Compatibility | Tensile Strength (break) N/25mm | Tensile Strength (yield) N/25mm | Elongation E (%) |
|---|---|---|---|---|---|
| Example 1 | Acrylic Resin 1 Acrylic Resin 2 Pigment 1 Epoxy cross-linking agent | Good | 20 | 15 | 173 |
| Example 2 | Acrylic Resin 1 Acrylic Resin 2 Pigment 2 Bis-amide cross-linking agent | Good | 17 | 7 | 213 |
| Example 3 | Acrylic Resin 1 Acrylic Resin 2 Acrylic Resin 3 Pigment 5 Bis-amide cross-linking agent | Good | 17. | 7 | 299 |
| Example 4 | Acrylic Resin 1 Acrylic Resin 2 Acrylic Resin 3 Pigment 6 Bis-amide cross-linking agent | Good | 17 | 7 | 304 |
| Example 5 | Acrylic Resin 1 Acrylic Resin 2 Acrylic Resin 3 Pigment 1 Pigment 5 Bis-amide cross-linking agent | Good | 16 | 13 | 219 |
| Example 6 | Acrylic Resin 1 Acrylic Resin 2 Acrylic Resin 3 Pigment 1 Pigment 6 Bis-amide cross-linking agent | Good | 16 | 14 | 194 |
| Example 7 | | | 20 | 12 | 237 |

(continued)

| | (Meth)acrylic pigmented film | Compatibility | Tensile Strength (break) N/25mm | Tensile Strength (yield) N/25mm | Elongation E (%) |
|---|---|---|---|---|---|
| Example 8 | Acrylic Resin 5 Acrylic Resin 6 Pigment 1 Epoxy cross-linking agent | Good | 17 | 20 | 97 |
| Example 9 | Acrylic Resin 3 Acrylic Resin 5 Acrylic Resin 6 Pigment 4 Epoxy cross-linking agent | Good | 18 | 27 | 51 |
| Example 10 | Acrylic Resin 1 Acrylic Resin 5 Acrylic Resin 6 Pigment 4 Epoxy cross-linking agent | Good | 16 | 4 | 180 |

## Claims

1. A method for preparing a (meth)acrylic pigmented film, comprising
   forming a pigment concentrate by dispersing a pigment into a dispersant selected from the group consisting of a (meth)acrylic polymer containing a unit derived from a hydroxyl group-containing monomer and a (meth)acrylic polymer containing a unit derived from an amino group-containing monomer, and
   mixing the pigment concentrate with a (meth)acrylic polymer containing a unit derived from a carboxyl group-containing monomer and a (meth)acrylic polymer containing a unit derived from an amino group-containing monomer.

2. The method according to claim 1, wherein the (meth)acrylic polymer containing a unit derived from a carboxyl group-containing monomer and the (meth)acrylic polymer containing a unit derived from an amino group-containing monomer are cross-linked with a cross-linking agent having a functional group capable of reacting with both or either of said carboxyl group and/or said amino group.

3. The method according to claim 1 or 2, wherein the (meth)acrylic polymer containing a unit derived from a carboxyl group-containing monomer has a glass transition temperature (Tg) of 0°C or higher, and the (meth)acrylic polymer containing a unit derived from an amino group-containing monomer has a glass transition temperature (Tg) of 0°C or lower.

4. The method according to claim 1 or 2, wherein the (meth)acrylic polymer containing a unit derived from a carboxyl group-containing monomer has a glass transition temperature (Tg) of 0°C or lower, and the (meth)acrylic polymer containing a unit derived from an amino group-containing monomer has a glass transition temperature (Tg) of 0°C or higher.

5. A method for preparing a marking film comprising
   providing a (meth)acrylic pigmented film according to the method any one of claims 1 to 4, wherein the (meth)acrylic pigmented film has a front surface and a backside surface opposite to the front surface,
   laminating a second (meth)acrylic pigmented film laminated onto the front surface of the (meth)acrylic pigmented film, and
   adhesively disposing an adhesive layer on the backside surface of the (meth)acrylic pigmented film.

6. A method for preparing a receptor sheet useful for forming a marking film, comprising

providing a (meth)acrylic pigmented film according to the method of any one of claims 1 to 4, and adhesively disposing an adhesive layer on the backside surface of the (meth)acrylic pigmented film.

**Patentansprüche**

1. Verfahren zum Herstellen einer pigmentierten (Meth)acrylfolie, umfassend
Bilden eines Pigmentkonzentrats, indem ein Pigment in einem Dispergiermittel dispergiert wird, ausgewählt aus der Gruppe bestehend aus einem (Meth)acrylpolymer, das eine von einem eine Hydroxylgruppe enthaltenden Monomer abgeleitete Einheit enthält, und einem (Meth)acryl-polymer, das eine von einem eine Aminogruppe enthaltenden Monomer abgeleitete Einheit enthält, und
Mischen des Pigmentkonzentrats mit einem (Meth)acrylpolymer, das eine von einem eine Carboxylgruppe enthaltenden Monomer abgeleitete Einheit enthält, und einem (Meth)acrylpolymer, das eine von einem eine Aminogruppe enthaltenden Monomer abgeleitete Einheit enthält.

2. Verfahren nach Anspruch 1, wobei das (Meth)acrylpolymer, das eine von einem eine Carboxylgruppe enthaltenden Monomer abgeleitete Einheit enthält, und das (Meth)acrylpolymer, das eine von einem eine Aminogruppe enthaltenden Monomer abgeleitete Einheit enthält, mit einem Vernetzungsmittel vernetzt sind, das eine funktionale Gruppe aufweist, die mit beiden oder mit einer der Carboxylgruppe und der Aminogruppe reagieren kann.

3. Verfahren nach Anspruch 1 oder 2, wobei das (Meth)acrylpolymer, das eine von einem eine Carboxylgruppe enthaltenden Monomer abgeleitete Einheit enthält, eine Glasübergangstemperatur (Tg) von 0 °C oder höher aufweist und das (Meth)acrylpolymer, das eine von einem eine Aminogruppe enthaltenden Monomer abgeleitete Einheit enthält, eine Glasübergangstemperatur (Tg) von 0 °C oder niedriger aufweist.

4. Verfahren nach Anspruch 1 oder 2, wobei das (Meth)acrylpolymer, das eine von einem eine Carboxylgruppe enthaltenden Monomer abgeleitete Einheit enthält, eine Glasübergangstemperatur (Tg) von 0 °C oder niedriger aufweist und das (Meth)acrylpolymer, das eine von einem eine Aminogruppe enthaltenden Monomer abgeleitete Einheit enthält, eine Glasübergangstemperatur (Tg) von 0 °C oder höher aufweist.

5. Verfahren zum Herstellen einer Beschriftungsfolie, umfassend
Bereitstellen einer pigmentierten (Meth)acrylfolie gemäß dem Verfahren nach einem der Ansprüche 1 bis 4, wobei die pigmentierte (Meth)acryl-folie eine vordere Oberfläche und eine der vorderen Oberfläche gegenüberliegende hintere Oberfläche aufweist,
Laminieren einer zweiten pigmentierten (Meth)acrylfolie, die auf die vordere Oberfläche der pigmentierten (Meth)acrylfolie laminiert ist, und haftendes Aufbringen einer Klebstoffschicht auf die hintere Oberfläche der pigmentierten (Meth)acrylfolie.

6. Verfahren zum Herstellen eines Empfangsblatts, das sich zur Bildung einer Beschriftungsfolie eignet, umfassend
das Bereitstellen einer pigmentierten (Meth)acrylfolie gemäß dem Verfahren nach einem der Ansprüche 1 bis 4 und haftendes Aufbringen einer Klebstoffschicht auf die hintere Oberfläche der pigmentierten (Meth)acrylfolie.

**Revendications**

1. Procédé de préparation d'un film (méth)acrylique pigmenté, comprenant :

former un concentré de pigment en dispersant un pigment dans un dispersant choisi dans le groupe constitué par un polymère (méth)acrylique contenant un motif dérivé d'un monomère contenant un groupe hydroxyle et un polymère (méth)acrylique contenant un motif dérivé d'un monomère contenant un groupe amino, et mélanger le concentré de pigment avec un polymère (méth)acrylique contenant un motif dérivé d'un monomère contenant un groupe carboxyle et un polymère (méth)acrylique contenant un motif dérivé d'un monomère contenant un groupe amino.

2. Procédé selon la revendication 1, dans lequel le polymère (méth)acrylique contenant un motif dérivé d'un monomère contenant un groupe carboxyle et le polymère (méth)acrylique contenant un motif dérivé d'un monomère contenant un groupe amino sont réticulés avec un agent de réticulation ayant un groupe fonctionnel capable de réagir avec l'un ou les deux dudit groupe carboxyle et/ou dudit groupe amino.

**3.** Procédé selon la revendication 1 ou 2, dans lequel le polymère (méth)acrylique contenant un motif dérivé d'un monomère contenant un groupe carboxyle a une température de transition vitreuse (Tg) de 0 °C ou plus, et le polymère (méth)acrylique contenant un motif dérivé d'un monomère contenant un groupe amino a une température de transition vitreuse (Tg) de 0 °C ou moins.

**4.** Procédé selon la revendication 1 ou 2, dans lequel le polymère (méth)acrylique contenant un motif dérivé d'un monomère contenant un groupe carboxyle a une température de transition vitreuse (Tg) de 0 °C ou moins, et le polymère (méth)acrylique contenant un motif dérivé d'un monomère contenant un groupe amino a une température de transition vitreuse (Tg) de 0 °C ou plus.

**5.** Procédé de préparation d'un film de marquage comprenant :

fournir un film (méth)acrylique pigmenté selon le procédé de l'une quelconque des revendications 1 à 4, dans lequel le film (méth)acrylique pigmenté possède une surface avant et une surface arrière opposée à la surface avant,
stratifier un second film (méth)acrylique pigmenté, stratifié sur la surface avant du film (méth)acrylique pigmenté, et
disposer de manière adhésive une couche d'adhésif sur la surface arrière du film (méth)acrylique pigmenté.

**6.** Procédé de préparation d'une feuille réceptrice utile pour former un film de marquage, comprenant fournir un film (méth)acrylique pigmenté selon le procédé de l'une quelconque des revendications 1 à 4, et
disposer de manière adhésive une couche d'adhésif sur la surface arrière du film (méth)acrylique pigmenté.

100

31

3
2
5

30
11

1

4
41
12

FIG. 1

200

1

4

FIG. 2

**EP 2 115 048 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006241270 A
- JP 2927701 B
- JP 3236767 B
- JP 3811015 B